# EUROPEAN PATENT APPLICATION

(11) **EP 4 725 643 A2**
(43) Date of publication of application: **15.04.2026**
(21) Application number: 25207748.2
(22) Date of filing: 09.10.2025
(51) Int. Cl.: B23P 15/00, B21K 3/04, F01D 5/34

(54) **DISTORTION-FREE MANUFACTURING OF LARGE TITANIUM INTEGRALLY BLADED ROTORS**

(30) Priority: 14.10.2024 US 202418914363
(71) Applicant: RTX Corporation, Farmington, CT 06032 (US)
(72) Inventor: Burns, Sean A., Wallingford, 06492 (US); Koczera, Richard F., Meriden, 06450 (US)
(74) Representative: Schmitt-Nilson Schraud Waibel Wohlfrom Patentanwälte Partnerschaft mbB

(57) **Abstract**

A process for eliminating residual stress (14) in a forging (10) for rotors including providing the forging (10) for the rotor; and removing a bulk material from an area located near airfoils (20) of a finish part (18) formed from the forging prior to process steps selected from the group consisting of a rough turn, a finish mill of blades, a vibratory polish of the blades and a finish turn.

## Description

The present disclosure is directed to the improved process for eliminating the bulk of residual stress in large titanium integrally bladed rotors.

The forging process of large titanium rotors leaves excess thermal stress on the grain structure as the forging cools, leaving a higher amount of stress at the center of mass. As the part is machined and the grains under tension are released, the part will shift dimensionally, moving features out of tolerance.

In accordance with the present disclosure, there is provided a process for eliminating residual stress in a forging for rotors comprising providing the forging for the rotor; and removing a bulk material from an area located near airfoils of a finish part formed from the forging prior to process steps selected from the group consisting of a rough turn, a finish mill of blades, a vibratory polish of the blades and a finish turn.

Particular embodiments further may include at least one, or a plurality of, the following optional features, alone or in combination with each other:

A further embodiment of any of the foregoing embodiments may additionally and/or alternatively include material of the forging possesses a residual stress located proximate locations from which the airfoils of the finish part are formed within the forging.

A further embodiment of any of the foregoing embodiments may additionally and/or alternatively include the process for eliminating residual stress in a forging for rotors further comprising reducing the residual stress from the forging early in the process in the absence of distortion of the part during the process.

A further embodiment of any of the foregoing embodiments may additionally and/or alternatively include the process for eliminating residual stress in a forging for rotors further comprising forming features on the rotor that locates the rotor flat and centered in a machining fixture.

A further embodiment of any of the foregoing embodiments may additionally and/or alternatively include the process for eliminating residual stress in a forging for rotors further comprising generating at least one of a timing feature, a radial locating feature, and an axial locating feature configured to locate the finish part inside of the forging.

A further embodiment of any of the foregoing embodiments may additionally and/or alternatively include the process for eliminating residual stress in a forging for rotors further comprising removing forging material in the range of 45-50% by volume near a blade block.

A further embodiment of any of the foregoing embodiments may additionally and/or alternatively include removing the bulk material from the area located near airfoils of the finished part formed from the forging is completed prior to a finish machining step.

In accordance with the present disclosure, there is provided a process for eliminating residual stress in a forging for an integrally bladed rotor comprising providing a forging for the integrally bladed rotor; and removing material from the forging proximate a blade block prior to a finish machining step.

Particular embodiments further may include at least one, or a plurality of, the following optional features, alone or in combination with each other:

A further embodiment of any of the foregoing embodiments may additionally and/or alternatively include the process for eliminating residual stress in a forging for an integrally bladed rotor further comprising mechanically relaxing the forging by removing the material over areas that would keep a part formed from the forging rigid.

A further embodiment of any of the foregoing embodiments may additionally and/or alternatively include the process for eliminating residual stress in a forging for an integrally bladed rotor further comprising removing the bulk material from the forging in areas near airfoils of a finish part formed from the forging; eliminating a bulk of residual stress early in the process; and ensuring dimensional conformity in the finish part.

A further embodiment of any of the foregoing embodiments may additionally and/or alternatively include the process for eliminating residual stress in a forging for an integrally bladed rotor further comprising removing forging material in the range of 45-50% by volume near the blade block.

A further embodiment of any of the foregoing embodiments may additionally and/or alternatively include the process for eliminating residual stress in a forging for an integrally bladed rotor further comprising generating at least one of a timing feature, a radial locating feature, and an axial locating feature configured to locate a finish part inside of the forging.

A further embodiment of any of the foregoing embodiments may additionally and/or alternatively include material of the forging possesses a residual stress located proximate locations from which airfoils of a finish part are formed within the forging.

In accordance with the present disclosure, there is provided a process for eliminating residual stress in a forging for an integrally bladed rotor comprising providing a forging for the integrally bladed rotor; and removing material from the forging in a range of 45-50% by volume proximate a blade block prior to a finish machining step.

Particular embodiments further may include at least one, or a plurality of, the following optional features, alone or in combination with each other:

A further embodiment of any of the foregoing embodiments may additionally and/or alternatively include the finish machining step is selected from the group consisting of a rough turn, a finish mill of blades, a vibratory polish of the blades and a finish turn.

A further embodiment of any of the foregoing embodiments may additionally and/or alternatively include material of the forging possesses a residual stress located proximate locations from which airfoils of a finish part are formed within the forging.

A further embodiment of any of the foregoing embodiments may additionally and/or alternatively include the process further comprising reducing the residual stress from the forging in the absence of distortion of the part during the process.

A further embodiment of any of the foregoing embodiments may additionally and/or alternatively include the process further comprising generating at least one of a timing feature, a radial locating feature, and an axial locating feature configured to locate a finish part inside of the forging.

A further embodiment of any of the foregoing embodiments may additionally and/or alternatively include the process further comprising mechanically relaxing the forging by removing the material over areas that would keep a part formed from the forging rigid.

A further embodiment of any of the foregoing embodiments may additionally and/or alternatively include the process further comprising leaving the finish machining step in the absence of a part movement.

Other details of the process for eliminating the bulk of residual stress in large titanium integrally bladed rotors are set forth in the following detailed description and the accompanying drawings wherein like reference numerals depict like elements.
Fig. 1 is a schematic representation of a forging for a rotor.
Fig. 2 is a schematic representation of an exemplary forging for a rotor.
Fig. 3 is a schematic representation of an exemplary rotor during processing.
Fig. 4 is a schematic representation of rotor deflection after traditional rotor machining process.
Fig. 5 is a schematic representation of an exemplary rotor post processing.
Fig. 6 is a schematic representation of exemplary process diagram.

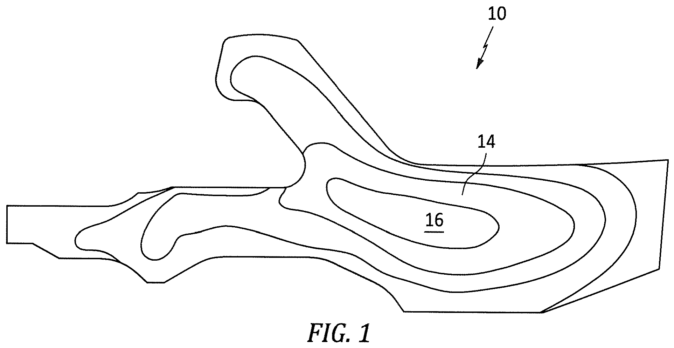

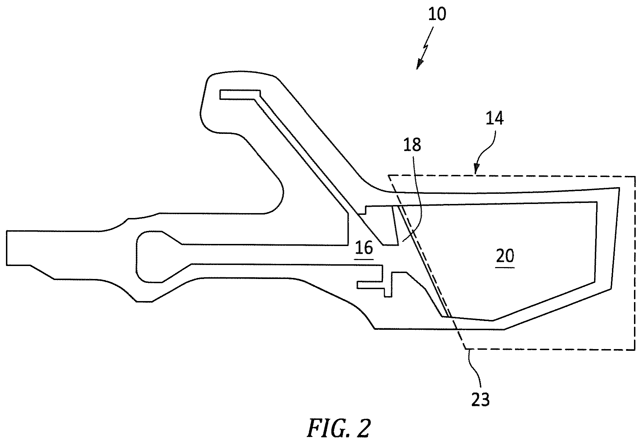

Referring to Fig. 1 and Fig. 2 are cross-sectional views of an exemplary forging 10. The forging 10 can be a component of a gas turbine engine. The forging 10 can be for a rotor 12, such as an integrated blade rotor (IBR). After the forging 10 has been created, residual stress 14 can be present within the forging 10. A higher amount of residual stress 14 can be located at a center of mass 16 of the forging 10. The outline of a finish part 18 is shown at Fig. 2 representing an approximation of the location of the finish part 18 within the forging 10. The material of the forging 10 that can possess the residual stress 14 can be located proximate the locations from which airfoils 20 of the finish part 18 are to be formed within the forging 10.

The material of the forging 10 is removed in the area between the airfoils 20, that is near a blade block 23 in a sequence that can systematically eliminate the residual stress inherent to the forging process prior to any finish machining steps.

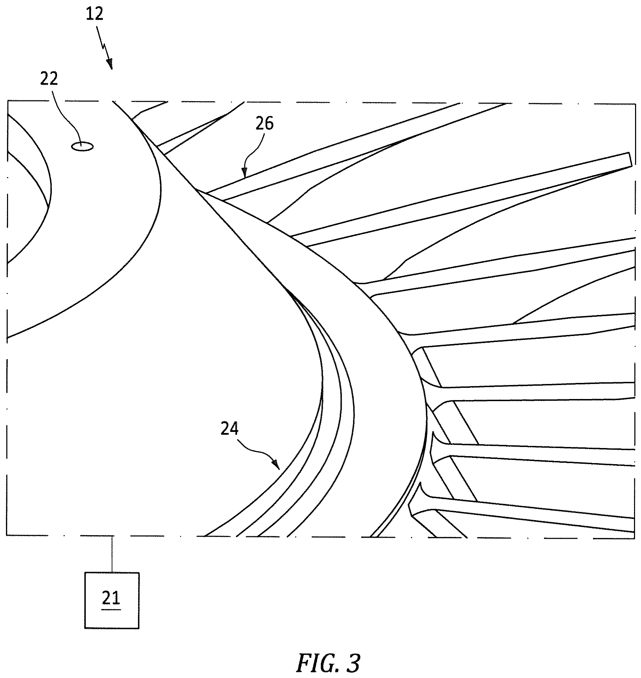

Referring also to Fig. 3, a rotor 12 is shown partially processed. The rotor 12 is shown having features on the rotor 12 that locates the rotor 12 flat and centered in a machining fixture 21. The process generates a timing feature 22, radial locating features 24, and axial locating features 26 that can be used to locate the finish part 18 inside of the forging 10 rough stock. The timing feature 22 is formed on the rotor 12. The radial locating feature 24 is formed on the rotor 12. The axial locating feature 26 is formed on the rotor 12.

The process includes relaxing the forging 10 in which bulk material is removed from the forging 10 rough stock proximate the airfoils 20. Mechanically relaxing the forging 10 includes removing the material over large areas that would keep the part 18 rigid. Removing the bulk material from the forging 10 in the areas near the airfoils 20 eliminates the bulk of the residual stress 14 up-front (early in the process), ensuring dimensional conformity in the finish part 18. Removal of the bulk material from the forging 10 near the airfoils 20 allows the part 18 to be set-up for immediate bulk material removal, removing up to approximately 15-20% of overall processing time. The bulk material removed near the airfoils 20, can include removing from 40-50% of the volume of the forging 10 proximate the area near the airfoils 20. During the process, after the second rough turn operation, most of the residual stress 14 is removed from the part 18, leaving the finish operations with little to no part movement.

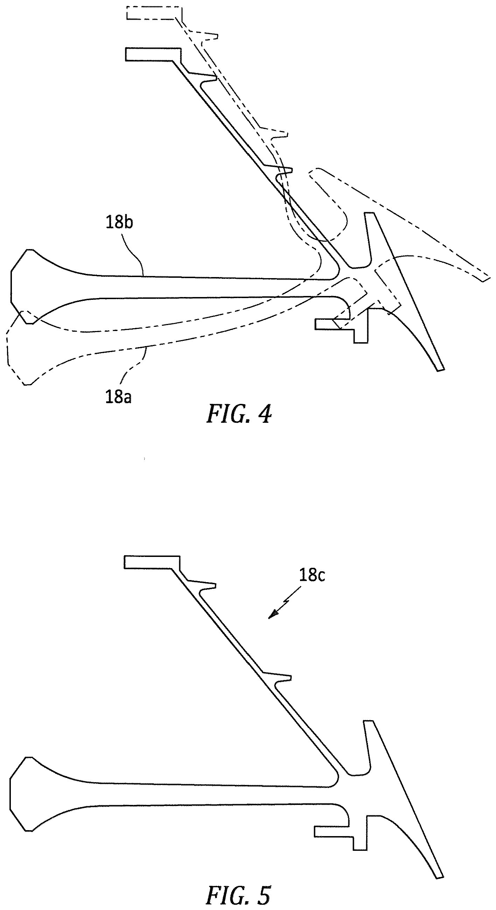

Referring also to Fig. 4 and Fig. 5, the impact of the process is demonstrated. Fig. 4 shows the effects of a traditional sequence of operations for forming the part 18 from the forging 10 which leaves bulk material removal towards the end of the process, distorting the finish dimensions on the part 18a. The target part finish dimensions are shown as 18b. The distorted part finish dimensions are shown as 18a. It can be seen that the distorted part 18a has deflected away from the target part finish dimensions 18b. Fig. 5 shows the finish part 18c with little detected distortion. The process greatly reduces the residual stress 14 from the forging 10 early in the process resulting in less distortion.

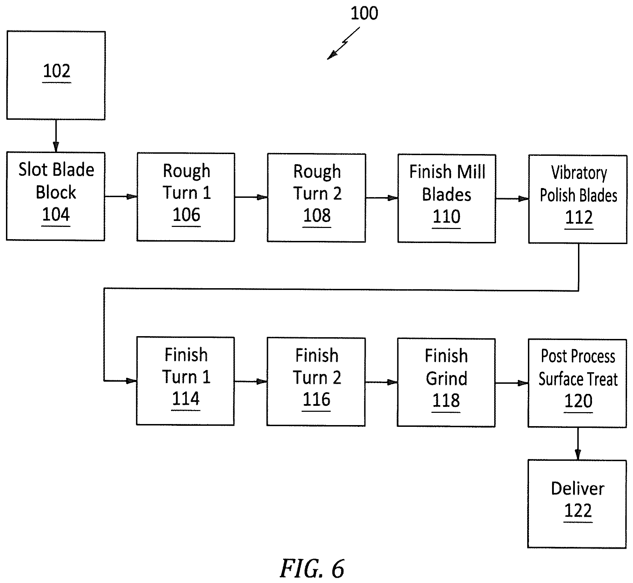

Referring also to Fig. 6, the exemplary embodiment process 100 is shown. The process 100 begins at 102 with the rough forging being provided. The next step 104 includes removing the bulk material near the airfoils, shown as slot the blade block. This material removal is seen being performed early in the process 100, which represents a new approach. The step of slot blade block can include removing material in the range of 45-50% by volume (cubic inches). The next step 106 includes the rough turn 1 followed by the rough turn 2 at step 108. The rough turn 1 step can include removal of from 10% to 15% by volume of the forging material. The rough turn 2 step can include removal of from 5% to 15% by volume of the forging material. After step 108, the next step 110 includes finish mill blades. The finish mill of the blades step can include removal of from 1% to 5% by volume of the forging material. The next step 112 includes a vibratory polish of the blades. The next step 114 includes a finish turn 1 followed by a finish turn 2 at step 116. The finish turn 1 step can include removal of from 1% to 5% by volume of the forging material. The finish turn 2 step can include removal of from 1% to 5% by volume of the forging material. The finish grind step 118 is next. The post processing surface treatment is performed at step 120. Finally, the part 18 is delivered at step 122. The finish operations 114 through 120 experience little to no part 18 movement, since the process step 104 of removing the material near the blade block is performed early in the process.

A technical advantage of the disclosed process for eliminating the bulk of residual stress in large titanium integrally bladed rotors includes performing the sequence in which the material is removed, systematically eliminating the residual stress inherent to the forging process prior to any finish machining.

Another technical advantage of the disclosed process for eliminating the bulk of residual stress in large titanium integrally bladed rotors includes a process that generates radial and axial locating features, as well as timing features that can be used to locate the finish part inside of the rough stock.

Another technical advantage of the disclosed process for eliminating the bulk of residual stress in large titanium integrally bladed rotors includes processing to eliminate the bulk of the residual stress up-front, ensuring dimensional conformity in the finish condition.

Another technical advantage of the disclosed process for eliminating the bulk of residual stress in large titanium integrally bladed rotors includes generating a condition that allows the part to be set-up for immediate bulk material removal, removing up to 15-20% of overall processing time.

Another technical advantage of the disclosed process for eliminating the bulk of residual stress in large titanium integrally bladed rotors includes removing the bulk of the high stress material being removed in the areas between the airfoils in the blade block.

There has been provided a process for eliminating the bulk of residual stress in large titanium integrally bladed rotors. While the process for eliminating the bulk of residual stress in large titanium integrally bladed rotors has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. A process for eliminating residual stress in a forging for rotors comprising:
providing the forging for the rotor; and removing a bulk material from an area located near airfoils of a finish part formed from the forging prior to finish machining steps selected from the group consisting of a rough turn, a finish mill of blades, a vibratory polish of the blades, and a finish turn.

2. The process for eliminating residual stress in a forging for rotors according to claim 1, wherein material of the forging possesses a residual stress located proximate locations from which the airfoils of the finish part are formed within the forging.

3. The process for eliminating residual stress in a forging for rotors according to claim 2, further comprising:
reducing the residual stress from the forging early in the process in the absence of distortion of the part during the process.

4. The process for eliminating residual stress in a forging for rotors according to any of claims 1 to 3, further comprising:
forming features on the rotor that locates the rotor flat and centered in a machining fixture.

5. The process for eliminating residual stress in a forging for rotors according to any of claims 1 to 4, further comprising:
generating at least one of a timing feature, a radial locating feature, and an axial locating feature configured to locate the finish part inside of the forging.

6. The process for eliminating residual stress in a forging for rotors according to any of claims 1 to 5, further comprising:
removing forging material in the range of 45-50% by volume near a blade block.

7. The process for eliminating residual stress in a forging for rotors according to any of claims 1 to 6, wherein removing the bulk material from the area located near airfoils of the finished part formed from the forging is completed prior to a finish machining step.

8. The process for eliminating residual stress in a forging according to any of claim 1 to 7, wherein the process is for an integrally bladed rotor and comprises:
providing a forging for the integrally bladed rotor; and
removing material from the forging proximate a blade block prior to a finish machining step.

9. The process for eliminating residual stress in a forging for an integrally bladed rotor according to claim 8, further comprising:
mechanically relaxing the forging by removing the material over areas that would keep a part formed from the forging rigid.

10. The process for eliminating residual stress in a forging for an integrally bladed rotor according to claim 8 or 9, further comprising:
removing the bulk material from the forging in areas near airfoils of a finish part formed from the forging;
eliminating a bulk of residual stress early in the process; and
ensuring dimensional conformity in the finish part.

11. A process for eliminating residual stress in a forging for an integrally bladed rotor comprising:
providing a forging for the integrally bladed rotor;
and
removing material from the forging in a range of 45-50% by volume proximate a blade block prior to a finish machining step.

12. The process according to claim 11, wherein the finish machining step is selected from the group consisting of a rough turn, a finish mill of blades, a vibratory polish of the blades and a finish turn.

13. The process according to claim 11 or 12, wherein material of the forging possesses a residual stress located proximate locations from which airfoils of a finish part are formed within the forging; and/or
further comprising:
reducing the residual stress from the forging in the absence of distortion of the part during the process.

14. The process according to any of claims 11 to 13 , further comprising:
generating at least one of a timing feature, a radial locating feature, and an axial locating feature configured to locate a finish part inside of the forging.

15. The process according to any of claims 11 to 14, further comprising:
mechanically relaxing the forging by removing the material over areas that would keep a part formed from the forging rigid; and/or
further comprising:
leaving the finish machining step in the absence of a part movement.
